# EUROPEAN PATENT SPECIFICATION

(11) **EP 2 538 118 B1**
(45) Date of publication and mention of the grant of the patent: **25.02.2015**
(21) Application number: 11170546.3
(22) Date of filing: 20.06.2011
(51) Int. Cl.: F16H 57/021

(54) **Gearbox split sump and lubricant flow control method**
Unterteilter Getriebesumpf und Schmiermittelflusssteuerungsverfahren
Réservoir subdivisé de boîte de vitesses et méthode de contrôle du flux de lubrifiant

(43) Date of publication of application: 26.12.2012
(73) Proprietor: Turner Powertrain Systems Limited, West Midlands Wolverhampton, WV6 0QT (GB)
(72) Inventor: Hubble, Richard Simon, WOLVERHAMPTON, West Midlands WV6 0QT (GB)
(74) Representative: Modiano, Micaela Nadia

(56) References cited:
- WO-A1-2005/115790
- CN-U- 201 568 532
- US-B1- 6 582 331

## Description

### Technical Field

This disclosure relates to a device and a method for providing lubrication in a gearbox positioned within an oil sump and, in particular, to a device and a method for providing lubrication in a gearbox positioned within an oil sump of a motor vehicle engine.

### Background

Gearboxes may be used for various drive train applications in an engine of a motor vehicle. The gearboxes may include components such as gears, bearings, thrust washers, shafts, etc. that are housed within a gear housing. These components may need to be sufficiently lubricated during operation in order to minimise fatigue and wear.

Gearboxes may be located in an oil sump, which provides an internal reservoir of lubricating oil. Gears may be lubricated by oil from the oil sump. However, the gears which may move within the oil sump may need to overcome resistance of the oil. The resistance may be in the form of stress forces caused by frictional drag due to the viscosity of the oil. These forces may increase the power consumption.

US 5,281,110 discloses an oil baffle for sealing and separating the running gear cavity in a hermetic reciprocating piston compressor from an oil sump which may be located in a lower part of the compressor housing. The oil baffle may include a L-shaped flange connected to the outboard bearing and crankcase of the compressor. Horizontal ribs and a dimple on the vertical portion of the oil baffle may bias the baffle into sealing contact with the crankcase to prevent oil from the oil sump to flow into the running gear cavity.

However, such an oil baffle may not provide an optimal lubrication for gears in gearbox that are in a compact arrangement. The present disclosure is directed, at least in part, to improving or overcoming one or more aspects of the prior art system.

US 6,582,331 discloses a transfer case comprising a casing, an input shaft, a first output shaft, a second output shaft and an endless chain selectively transmitting torque from the first output shaft to the second output shaft. The casing includes a lubricant reservoir and a torque transfer compartment. The input shaft is rotatably mounted within the casing and extends into the lubricant reservoir. An oil pump supplies lubricant to the endless chain in the chain compartment and excess amount of the lubricant is returned to the lubricant reservoir through a port. The lubrication arrangement allows retaining an amount of lubricant in the chain compartment to prevent oil churning and aeration.

CN 201568532 U, which shows a gearbox split sump according to the preamble of claim 1 and a method of controlling flow of lubricant according to the preamble of claim 9, discloses a power takeoff of an engine for a heavy-duty special vehicle, which comprises a flywheel casing, a power takeoff chamber part, a flywheel chamber part, an idle gear assembly and an output gear assembly. The radius of the part of a sealing shaft of an input crankshaft gear of the power takeoff part is smaller than the radius of the position of the upper liquid level of an oil pool formed at the bottom of the casing by 13 to 15mm, an oil seal seat is provided on the flywheel casing and a framework oil seal is provided between a sealing shaft and the oil seal seat. A power takeoff chamber is isolated from a flywheel chamber.

### Brief Summary of the Invention

In a first aspect, the present disclosure describes a gearbox split sump comprising a dry portion and an oil reservoir; a baffle plate separating the dry portion from the oil reservoir, the baffle plate having an aperture for a drive shaft to extend through the baffle plate and to drivingly support a gear located in the dry portion; and an oil seal positioned between the drive shaft and the baffle plate.

In a second aspect, the present disclosure describes a method of controlling flow of lubricant in a gearbox split sump, comprising the steps of arranging a baffle plate in the split sump to separate a dry portion and an oil reservoir; arranging a drive shaft to extend through an aperture in the baffle plate and to drivingly support a gear located in the dry portion; and positioning an oil seal between the drive shaft and the baffle plate.

### Brief Description of the Drawings

The foregoing and other features and advantages of the present disclosure will be more fully understood from the following description of various embodiments, when read together with the accompanying drawing, in which:
Fig. 1 is a isometric sectional view of a gearbox split sump according to the present disclosure; and
Fig. 2 is an isometric view of a baffle plate and seal housing of the gearbox split sump according to the present disclosure.

### Detailed Description

This disclosure generally relates to a gearbox split sump **10** having an optimal lubrication for gears.

The gearbox split sump **10** may be positioned in an engine for a motor vehicle. The gearbox split sump **10** may be located at a region an engine transmission is coupled to one or more differentials. The gearbox split sump **10** may be located in a gear cavity wherein the output of an engine is coupled to gears for transmission of power to the drive wheels. The sump comprises a dry portion **12** and an oil reservoir **14.** The dry portion **12** and the oil reservoir **14** may be located within the region an engine transmission is coupled to one or more differentials. The dry portion **12** and the oil reservoir **14** may be located in a gear cavity wherein the output of an engine is coupled to gears for transmission of power to the drive wheels.

The gearbox split sump **10** comprises a baffle plate **16.** The baffle plate **16** is arranged to separate the dry portion **12** from the oil reservoir **14.** The baffle plate **16** may be located within the region an engine transmission is coupled to one or more differentials. The baffle plate **16** may be located in a gear cavity wherein the output of an engine is coupled to gears for transmission of power to the drive wheels.

The baffle plate **16** may be a flat metal sheet. The baffle plate **16** may have an outer perimeter **26** engaged to the wall of the engine, such as a gear cavity wall **28.** The outer perimeter **26** may be rigidly connected to the cavity wall **28.** In an embodiment, the outer perimeter **26** may be hermetically connected the cavity wall **28.**

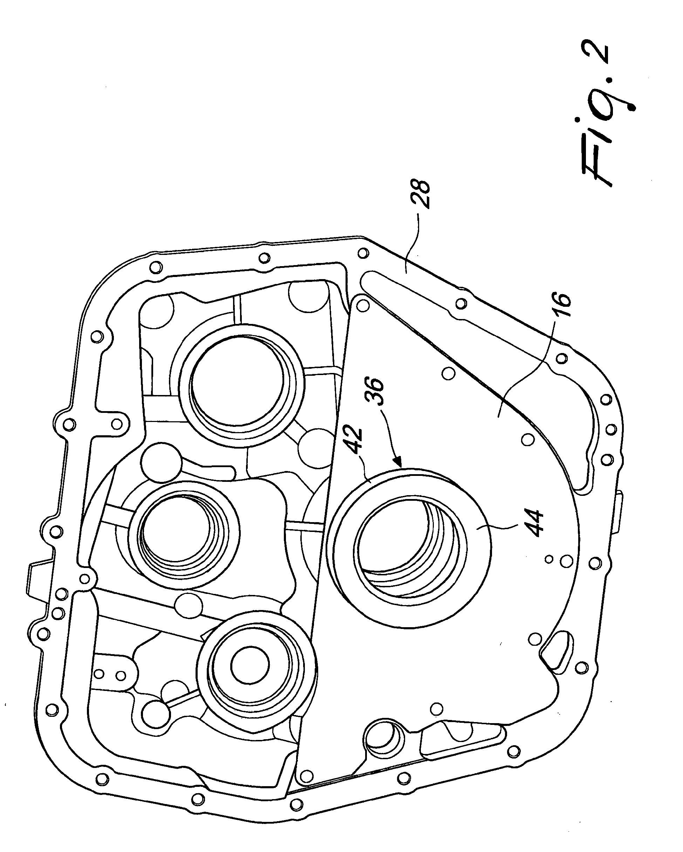

With reference to Fig. 2, the baffle plate **16** may be rigidly held in the gear cavity by fasteners **30,** such as rivets or screws. The fasteners **30** may couple the baffle plate **16** to cavity wall **38** In an embodiment, fastening plates may extend from the cavity wall **28.** The fasteners **30** may couple the baffle plate **16** to fastening plates.

The baffle plate **16** may extend across the gear cavity to separate the dry portion **12** from the oil reservoir **14.** The baffle plate **16** may separate a portion of the gear cavity into the dry portion **12** and the oil reservoir **14.** As a result of gravity, oil may accumulate in a lower portion of the gear cavity in an engine assembled for operation in a motor vehicle. The baffle plate **16** may separate the lower portion of the gear cavity into the dry portion **12** and the oil reservoir **14.**

In an embodiment, the baffle plate **16** may not extend from the lower portion of the gear cavity to the upper portion so that the dry portion **12** and the oil reservoir **14** may not be separated at the upper portion of the gear cavity.

A pump may be provided external to the gearbox. The pump may be mounted to the engine. The pump may transfer lubricating oil from the oil reservoir **14** through a filtration system to through passages drilled into the cavity walls **28.** The oil may be sprayed onto the gear **20,** bearings and clutches from the through passages. A controlled amount of oil may be fed onto the gear **20** in the dry portion. The gear **20** may pump out the lubricating oil from the dry portion **12** as the it rotates.

The baffle plate **16** comprises an aperture **34**. The aperture **34** may be positioned centrally on the baffle plate **16** and may be spaced from the outer perimeter **26.** The aperture **34** may be bound by a perimeter edge **35** of the baffle plate **16.**

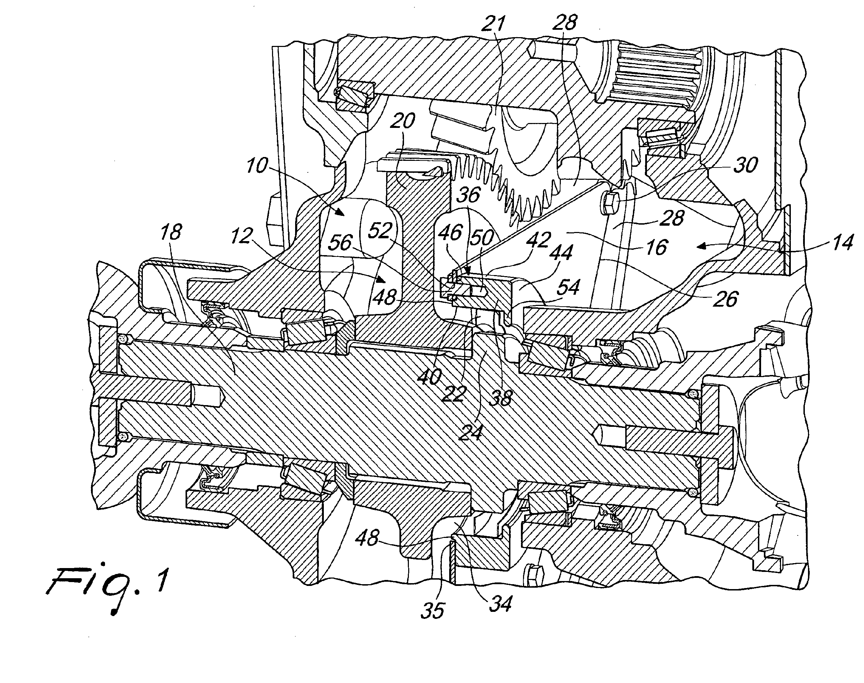

With reference, to Fig. 1 a drive shaft **18** extends through the aperture **34** of the baffle plate **16.** The aperture **34** may be suitably positioned on the baffle plate **16** to allow the drive shaft **18** to extend through the baffle plate **16.** The drive shaft **18** may be connected to the engine output and may carry a gear **20** for transmission of power from the engine to the drive wheels. The gear **20** is supported on the drive shaft **18** may suitable means.

The gear **20** is supported on the drive shaft **18** and positioned in the dry portion **12**. The gear **20** may be rotated in the dry portion **12** without being subject to frictional drag due to the presence of excess oil.

The gear **20** may mesh with a corresponding gear **21** for the transmission of power. The dry portion **12** of the gear cavity may be substantially separate from the oil reservoir **14** to enable transmission gears **20, 21** to mesh without being subject to frictional drag due to the presence of excess oil.

The gearbox split sump **10** comprises an oil seal **22**. The oil seal **22** is positioned between the drive shaft **18** and the baffle plate **16.** The oil seal **22** may seal a gap between the drive shaft **18** and the baffle plate **16.** The oil seal **22** is positioned to prevent oil flowing from the oil reservoir **14** into the dry portion **12** through the aperture **34** between the drive shaft **18** and the baffle plate **16.**

The oil seal **22** may have at least one surface portion to fluid sealingly contact the drive shaft **18** and at least one surface portion to fluid sealingly contact the baffle **16.** In an embodiment, the drive shaft **18** may be rotatably in contact with the oil seal **22** held in stationary contact with the baffle **16.** In an alternative embodiment, the oil seal **22** may rotate with the drive shaft **18** and may be rotatably in contact with the baffle **16.**

The gearbox split sump **10** comprises a seal housing **36**. The seal housing **36** is positioned to hold the oil seal **22** against the drive shaft **18.** The seal housing **36** may be a formed as a circular ring.

In a non-claimed embodiment, the seal housing **36** may be supported in the gearbox split sump **10** by engagement to a wall of the gear cavity.

According to the invention, the seal housing **36** is supported in the gearbox split sump **10** by engagement to the baffle **16.** The seal housing **36** may be disposed at the perimeter of the aperture **34.** The seal housing **36** may be disposed such that part of the seal housing **36** extends over the aperture **34.** In an embodiment, the seal housing **36** may be a metal casing.

The oil seal **22** may be positioned between the drive shaft **18** and the seal housing **36.** The oil seal **22** may seal a gap between the drive shaft **18** and the seal housing **36.** The oil seal **22** may be positioned to prevent oil flowing from the oil reservoir **14** into the dry portion **12** through the aperture **34** between the drive shaft **18** and the seal housing **36.** The oil seal **22** may be mounted to the seal housing **36.** A spring may be positioned in the seal housing **36** to bias the oil seal **22** against the drive shaft **18.**

In an embodiment, the oil seal **22** may be a lip type seal. The lip type seal may engage the drive shaft **18.** The oil seal **22** may be a rotary type oil seals. The leap type seal may be bound to the seal housing **36.**

The seal housing **36** may comprised of a housing body **38** having an inner perimeter wall **40** and an outer perimeter wall **42.** The inner perimeter wall **40** and outer perimeter wall **42** may be concentric. The inner perimeter wall **40** may contact the oil seal **22.**

The oil seal **22** may have at least one surface portion to fluid sealingly contact the drive shaft **18** and at least one surface portion to fluid sealingly contact the inner perimeter wall **40.** In an embodiment, the oil seal **22** may be held in stationary contact with the inner perimeter wall **40** and the drive shaft **18** may be rotatably in contact with the oil seal **22.** In an alternative embodiment, the oil seal **22** may rotate with the drive shaft **18** and may be rotatably in contact with the inner perimeter wall **40.**

The housing body **38** may have a first side **46** and a second side **44.** The first side **46** and the second side **44** may be mutually parallel. The first side **46** may contact a side of the baffle plate **16** when the seal housing **36** is engaged to the baffle plate **16.**

A housing lip **48** may extend from the first side **46** of the housing body **38** and in a direction away from the second side **44.** The housing lip **48** may have a side on the same plane as the inner perimeter wall **40** so as to form an extension of the inner perimeter wall **40.** The housing lip **48** may be a continuous ring around the first side **46.**

The housing lip **48** may be disposed on the part of the seal housing **36** extending over the aperture **34.** The housing lip **48** may extend into the aperture **34** when the seal housing **36** is engaged to the baffle plate **16.** The housing lip **48** may abut the perimeter edge 35 of the baffle plate **16** that encircles aperture **34.** The length of the housing lip **48** may correspond to the thickness of the baffle plate **16.**

The seal housing **36** has a bore **50** which protrudes into the housing body **38**. The bore **50** may be a blind hole and may have a longitudinal axis that is parallel to the inner perimeter wall **40** and outer perimeter wall **40**. The bore **50** is threaded internally.

The bore **50** is aligned on to a hole **52** formed in the baffle **16** when the seal housing **36** is engaged to the baffle plate **16.** The positioning of the bore **50** relative to the hole **52** may be assisted by the abutment of the housing lip **48** to the perimeter edge **35** of the baffle plate **16.** The hole **52** may be threaded internally. The hole **52** and the bore **50** may have the same diameters.

The seal housing **36** is rigidly supported to the baffle plate **16** through the retaining pin **56** engaging into the hole **52** and the bore **50.**

A housing collar **54** may extend from the inner perimeter wall **40** of the housing body **38** and in a direction away from the outer perimeter wall **42.** The housing collar **54** may have a side on the same plane as the second side **44** so as to form an extension of the second side **44.** The housing collar **54** may be a continuous ring on the inner perimeter wall **40.** The housing lip **48** may be a continuous ring at the inner perimeter wall **40.**

The housing collar **54** may be disposed on the part of the seal housing **36** extending over the aperture **34.** The housing collar **54** may abut the oil seal **22.** The housing collar **54** may abut a surface of the oil seal **22** adjacent to the at least one surface portion fluid sealingly in contact with the drive shaft **18** and to the least one surface portion fluid sealingly in contact with the inner perimeter wall **40.** The housing collar **54** may extend over at least a part of the of the oil seal **22.**

The housing collar **54** may retain the oil seal **22** in fluid sealed engagement between the inner perimeter wall **40** and the drive shaft **18.**

A rib **24** may be positioned on the drive shaft **18** to engage the oil seal **22.** The rib **24** may be integral with the drive shaft **18.** The rib **24** may be positioned on the drive shaft **18** to engage the oil seal **22.**

In an embodiment, the rib **24** may be positioned on the drive shaft and aligned to the baffle plate **16** such that the oil seal **22** may be arranged between the rib **24** and the baffle plate **16.**

In an embodiment, the rib **24** may be positioned on the drive shaft and aligned to the inner perimeter wall **40** such that the oil seal **22** may be arranged between the rib **24** and the seal housing **36.**

A method of controlling flow of lubricant, such as oil, in the gearbox split sump **10** may comprise arranging the baffle plate **16** in the gear cavity. The baffle plate **16** is arranged in the gearbox split sump **10** to separate a dry portion **12** and an oil reservoir **14.**

The method comprises arranging the drive shaft **18** to extend through the aperture **34** in the baffle plate **16** so that the drive shaft **18** may drivingly support the gear **20** in the dry portion **12**. The oil seal **22** is positioned between the drive shaft **18** and the baffle plate **16**.

The method comprises the step of coupling the seal housing **36** to the baffle plate **16** for retaining the oil seal **22.** The step of coupling the seal housing **36** to the baffle plate **16** comprises threading the retaining pin into the bore **50** provided on the seal housing **36** and the hole **52** provided in the baffle plate **16.**

The skilled person would appreciate that foregoing embodiments may be modified or combined to obtain the gearbox split sump **10** of the present disclosure.

### Industrial Applicability

This disclosure describes a gearbox split sump **10** having an optimal lubrication for transmission gears **20, 21** located in the dry portion **12.** The gearbox split sump **10** may have reduced power losses since the transmission gears **20**, **21** are positioned in the dry portion **12** which is separated from the oil reservoir **14.** The transmission gears **20, 21** may not be subject to resistance caused by frictional drag due to the viscosity of excess oil since the excess oil is retained in the oil reservoir **14.**

The oil seal **22** may prevent oil from the oil reservoir **14** to leak through the aperture **34** into the dry portion **12.**

Accordingly, this disclosure includes all modifications and equivalents of the subject matter recited in the claims appended hereto as permitted by applicable law. Moreover, any combination of the above-described elements in all possible variations thereof is encompassed by the disclosure unless otherwise indicated herein.

Where technical features mentioned in any claim are followed by references signs, the reference signs have been included for the sole purpose of increasing the intelligibility of the claims and accordingly, neither the reference signs nor their absence have any limiting effect on the technical features as described above or on the scope of any claim elements.

One skilled in the art will realise the disclosure may be embodied in other specific forms without departing from the disclosure or essential characteristics thereof. The foregoing embodiments are therefore to be considered in all respects illustrative rather than limiting of the disclosure described herein. Scope of the invention is thus indicated by the appended claims, rather than the foregoing description, and all changes that come within the meaning and range of equivalence of the claims are therefore intended to be embraced therein.

## Claims

1. A gearbox split sump (10) for a motor vehicle engine, the gearbox split sump (10) comprising:
a dry portion (12) and an oil reservoir (14);
a baffle plate (16) separating the dry portion (12) from the oil reservoir (14), the baffle plate (16) having an aperture (34) for a drive shaft (18) to extend through the baffle plate (16) and to drivingly support a gear (20);
an oil seal (22) positioned between the drive shaft (18) and the baffle plate (16) to prevent flow of oil from the oil reservoir (14) to the dry portion (12); and
a seal housing (36) positioned to hold the oil seal (22) against the drive shaft (18) wherein the gear (20) is located in the dry portion (12), **characterised in that** the seal housing (36) comprises a bore (50) aligned to a hole (52) in the baffle plate (16) for mutually receiving a retaining pin (56).

2. The gearbox split sump (10) of claim 1 wherein the seal housing (36) comprises a housing collar (54) to retain the oil seal (22).

3. The gearbox split sump (10) of claim 1 or 2 wherein the seal housing (36) is supported on the baffle (16).

4. The gearbox split sump (10) of claim 1, 2 or 3 wherein the seal housing (36) comprises a housing lip (48) to abut against a perimeter edge (35) of the baffle plate (16).

5. The gearbox spilt sump (10) of any one of claims 1 to 4 wherein the oil seal (22) is mounted to the seal housing (36).

6. The gearbox spilt sump (10) of claim 5 wherein a spring is positioned in the seal housing (36) to bias the oil seal (22) against the drive shaft (18).

7. The gearbox split sump (10) of any one of the preceding claims wherein the drive shaft (18) comprises a rib (24) to pressingly engage the oil seal (22).

8. A motor vehicle engine comprising the gearbox split sump (10) of any one of the preceding claims.

9. A method of controlling flow of lubricant in a gearbox split sump (10), the method comprising the steps of:
providing a baffle plate (16) in the split sump to separate a dry portion (12) and an oil reservoir (14);
arranging a drive shaft (18) to extend through an aperture (34) in the baffle plate (16) and to drivingly support a gear (20); positioning an oil seal (22) between the drive shaft (12) and the baffle plate (16);
positioning a seal housing (36) to hold the oil seal (22) against the drive shaft (18); and
locating the gear (20) in the dry portion (12), **characterised by** the step of coupling the seal housing (36) to the baffle plate (16) for retaining the oil seal (22) by threading a retaining pin into a bore (50) provided in the seal housing (36) and a hole (52) provided in the baffle plate (16).

10. The method of claim 9 further comprising the step of providing a rib (24) on the drive shaft (18) in proximity of the oil seal (22) to pressingly engage the oil seal (22).

## Patentansprüche

1. Unterteilter Getriebesumpf (10) für einen Fahrzeugmotor, wobei der unterteilte Getriebesumpf (10) umfasst:
einen trockenen Abschnitt (12) und ein Ölreservoir (14),
ein Leitblech (16), das den trockenen Abschnitt (12) von dem Ölreservoir (14) trennt, wobei das Leitblech (16) eine Öffnung (34) für eine Antriebswelle (18), die sich durch das Leitblech (16) hindurch erstreckt und ein Zahnrad (20) trägt und antreibt, aufweist,
eine Öldichtung (22), die zwischen der Antriebswelle (18) und dem Leitblech (16) angeordnet ist, um das Fließen von Öl aus dem Ölreservoir (14) in den trockenen Abschnitt (12) zu verhindern, und
ein Dichtungsgehäuse (36), das angeordnet ist, um die Öldichtung (22) gegen die Antriebswelle (18) zu halten, wobei das Zahnrad (20) in dem trockenen Abschnitt (12) angeordnet ist, **dadurch gekennzeichnet, dass** das Dichtungsgehäuse (36) eine Bohrung (50) umfasst, die bündig mit einem Loch (52) in dem Leitblech (16) angeordnet ist, um gemeinsam einen Haltebolzen (56) aufzunehmen.

2. Unterteilter Getriebesumpf (10) nach Anspruch 1, wobei das Dichtungsgehäuse (36) einen Gehäusekragen (54) umfasst, um die Öldichtung (22) zu sichern.

3. Unterteilter Getriebesumpf (10) nach Anspruch 1 oder 2, wobei das Dichtungsgehäuse (36) von dem Leitblech (16) gestützt wird.

4. Unterteilter Getriebesumpf (10) nach Anspruch 1, 2 oder 3, wobei das Dichtungsgehäuse (36) eine Gehäuselippe (48) zum Anliegen an einer Umfangskante (35) des Gleitblechs (16) umfasst.

5. Unterteilter Getriebesumpf (10) nach einem der Ansprüche 1 bis 4, wobei die Öldichtung (22) an dem Dichtungsgehäuse (36) befestigt ist.

6. Unterteilter Getriebesumpf (10) nach Anspruch 5, wobei eine Feder in dem Dichtungsgehäuse (36) angeordnet ist, um die Öldichtung (22) gegen die Antriebswelle (18) vorzuspannen.

7. Unterteilter Getriebesumpf (10) nach einem der vorstehenden Ansprüche, wobei die Antriebswelle (18) eine Rippe (24) zum drückenden Angreifen an die Öldichtung (22) umfasst.

8. Fahrzeugmotor, der einen unterteilten Getriebesumpf (10) nach einem der vorstehenden Ansprüche umfasst.

9. Verfahren zur Steuerung eines Schmiermittelflusses in einem unterteilten Getriebesumpf (10), wobei das Verfahren die folgenden Schritte umfasst:
Bereitstellen eines Leitblechs (16) in dem unterteilten Sumpf, um einen trocknen Abschnitt (12) und ein Ölreservoir (14) voneinander zu trennen;
Anordnen einer Antriebswelle (18), so dass sie sich durch eine Öffnung (34) in dem Leitblech (16) erstreckt und ein Zahnrad (20) trägt und antreibt;
Anordnen einer Öldichtung (22) zwischen der Antriebswelle (12) und dem Leitblech (16);
Anordnen eines Dichtungsgehäuses (36), um die Öldichtung (22) gegen die Antriebswelle (18) zu halten;
Fixieren des Zahnrads (20) in dem trockenen Abschnitt (12), **dadurch gekennzeichnet, dass** das Dichtungsgehäuse (36) an das Leitblech (16) gekoppelt wird, um die Öldichtung (22) zu halten, indem ein Haltebolzen in eine Bohrung (50), die in dem Dichtungsgehäuse (36) vorgesehen ist, und in ein Loch (52), das in dem Leitblech (16) vorgesehen ist, eingeführt wird.

10. Verfahren nach Anspruch 9, wobei das Verfahren weiterhin den folgenden Schritt umfasst:
Bereitstellen einer Rippe (24) in der Nähe der Öldichtung (22) an der Antriebswelle (18) um drückend an der Öldichtung (22) anzugreifen.

## Revendications

1. Puisard (10) en deux parties de boîte de vitesses pour moteur de véhicule automobile, le puisard (10) en deux parties de boîte de vitesses comportant :
une partie sèche (12) et un réservoir (14) d'huile ;
un déflecteur (16) séparant la partie sèche (12) par rapport au réservoir (14) d'huile, le déflecteur (16) ayant une ouverture (34) pour permettre à un arbre d'entraînement (18) de traverser le déflecteur (16) et de soutenir un pignon (20) pour l'entraîner ;
un joint (22) à huile placé entre l'arbre d'entraînement (18) et le déflecteur (16) pour empêcher l'écoulement d'huile du réservoir (14) d'huile vers la partie sèche (12) ; et
un logement (36) de joint placé de manière à retenir le joint (22) à huile contre l'arbre d'entraînement (18), le pignon (20) se trouvant dans la partie sèche (12), **caractérisé en ce que** le logement (36) de joint comprend un alésage (50) aligné avec un trou (52) du déflecteur (16) pour recevoir mutuellement une broche d'arrêt (56).

2. Puisard (10) en deux parties de boîte de vitesses selon la revendication 1, dans lequel le logement (36) de joint comprend une collerette (54) de logement pour retenir le joint (22) à huile.

3. Puisard (10) en deux parties de boîte de vitesses selon la revendication 1 ou 2, dans lequel le logement (36) de joint repose sur le déflecteur (16).

4. Puisard (10) en deux parties de boîte de vitesses selon la revendication 1, 2 ou 3, dans lequel le logement (36) de joint comprend une lèvre (48) de logement destinée à buter contre un bord périphérique (35) du déflecteur (16).

5. Puisard (10) en deux parties de boîte de vitesses selon l'une quelconque des revendications 1 à 4, dans lequel le joint (22) à huile est monté sur le logement (36) de joint.

6. Puisard (10) en deux parties de boîte de vitesses selon la revendication 5, dans lequel un ressort est placé dans le logement (36) de joint pour pousser le joint (22) à huile contre l'arbre d'entraînement (18).

7. Puisard (10) en deux parties de boîte de vitesses selon l'une quelconque des revendications précédentes, dans lequel l'arbre d'entraînement (18) comprend une nervure (24) destinée à venir en appui contre le joint (22) à huile.

8. Moteur de véhicule automobile, comportant le carter (10) en deux parties de boîte de vitesses selon l'une quelconque des revendications précédentes.

9. Procédé pour réguler l'écoulement de lubrifiant dans un puisard (10) en deux parties de boîte de vitesses, le procédé comportant les étapes consistant à :
installer un déflecteur (16) dans le puisard en deux parties afin de séparer une partie sèche (12) et un réservoir (14) d'huile ;
amener un arbre d'entraînement (18) à passer par une ouverture (34) ménagée dans le déflecteur (16) et à soutenir un pignon (20) pour l'entraîner ;
placer un joint (22) à huile entre l'arbre d'entraînement (12) et le déflecteur (16) ;
placer un logement (36) de joint pour retenir le joint (22) à huile contre l'arbre d'entraînement (18) ; et
installer le pignon (20) dans la partie sèche (12), **caractérisé par** l'étape consistant à monter le logement (36) de joint sur le déflecteur (16) pour retenir le joint (22) à huile en enfilant une broche d'arrêt dans un alésage (50) percé dans le logement (36) de joint et dans un trou (52) créé dans le déflecteur (16).

10. Procédé selon la revendication 9, comportant en outre une étape consistant à créer une nervure (24) sur l'arbre d'entraînement (18) à proximité du joint (22) à huile pour pousser le joint (22) à huile contre l'arbre d'entraînement.
